# EUROPEAN PATENT APPLICATION

(11) **EP 4 844 574 A1**
(43) Date of publication of application: **25.11.2026**
(21) Application number: 24918273.4
(22) Date of filing: 12.12.2024
(51) Int. Cl.: G06F 8/71

(54) **APPLICATION CREATION METHOD AND APPARATUS, DEVICE, AND STORAGE MEDIUM**

(30) Priority: 19.01.2024 CN 202410083404
(71) Applicant: Beijing Zitiao Network Technology Co., Ltd., Beijing 100190 (CN)
(72) Inventor: PAN, Yuyang, Beijing 100028 (CN)
(74) Representative: Marks & Clerk LLP
(86) International application number: PCT/CN2024/138746
(87) International publication number: WO 2025/152665

(57) **Abstract**

Embodiments of the disclosure relate to a method, apparatus, device, and storage media for application creation. The method proposed herein includes: obtaining configuration information indicating a plurality of agents and jump information associated with the plurality of agents for creating an application, the jump information indicating at least that a first agent of the plurality of agents is capable of switching to a second agent to process a request; and creating a target application based on the configuration information. In this way, embodiments of the present disclosure can support a user in creating a multi-agent based application (e.g., a multi-agent based bot), and can be applied to process a task by switching agents.

## Description

This application claims priority to Chinese Patent Application No. 2024100834045, filed on January 19, 2024, and entitled "METHOD, APPARATUS, DEVICE AND STORAGE MEDIUM FOR APPLICATION CREATION", the entirety of which is incorporated herein by reference.

### FIELD

The example embodiments of the present disclosure relate generally to the field of computers, and, more particularly, to a method, apparatus, device, and computer readable storage medium for application creation.

### BACKGROUND

With the development of computer technology, people can create and release various types of applications through some platforms. For example, with the development of Machine Learning technology, people can quickly create applications by configuring application parameters, such as models used by the applications, available plug-ins, etc.

### SUMMARY

In a first aspect of the present disclosure, there is provided a method for application creation. The method comprises: obtaining configuration information indicating a plurality of agents and jump information associated with the plurality of agents for creating an application, the jump information indicating at least that a first agent of the plurality of agents is capable of switching to a second agent to process a request; and creating a target application based on the configuration information.

In a second aspect of the present disclosure, there is provided an apparatus for application creation. The apparatus comprises: an obtaining module configured for obtaining configuration information indicating, for creating a plurality of agents in an application and jump information associated with the plurality of agents, the jump information indicating at least that a first agent amongst the plurality of agents is capable of switching to a second agent to process a request; and a creating module configured for creating a target application based on the configuration information.

In a third aspect of the present disclosure, there is provided an electronic device. The device comprises: at least one processing unit; and at least one memory, the at least one memory being coupled to the at least one processing unit and storing instructions for execution by the at least one processing unit. The instructions, when executed by at least one processing unit, cause the device to perform the method of the first aspect.

In a fourth aspect of the present disclosure, there is provided a computer-readable storage medium. The computer-readable storage medium stores a computer program, which being executable by a processor to implement the method of the first aspect.

It would be appreciated that the content described in the section is neither intended to identify the key features or essential features of the present disclosure, nor is it intended to limit the scope of the present disclosure. Other features of the present disclosure will be readily understood through the following description.

### BRIEF DESCRIPTION OF THE DRAWINGS

The above and other features, advantages, and aspects of the various embodiments of the present disclosure will become more apparent in combination with the accompanying drawings and with reference to the following detailed description. In the drawings, the same or similar reference symbols refer to the same or similar elements, wherein:
FIG. 1 illustrates a schematic diagram of an example environment in which embodiments of the present disclosure may be implemented;
FIG. 2 illustrates a flowchart of an example process for application creation according to some embodiments of the present disclosure;
FIGS. 3A to 3F illustrate an example interface according to some embodiments of the present disclosure;
FIG. 4 illustrates a schematic structural block diagram of an example apparatus for application creation according to some embodiments of the present disclosure; and
FIG. 5 illustrates a block diagram of an electronic device capable of implementing a plurality of embodiments of the present disclosure.

### DETAILED DESCRIPTION

The embodiments of the present disclosure will be described in more detail below with reference to the accompanying drawings. Although certain embodiments of the present disclosure are illustrated in the drawings, it would be appreciated that the present disclosure can be implemented in various forms and should not be interpreted as limited to the embodiments described herein. On the contrary, these embodiments are provided for a more thorough and complete understanding of the present disclosure. It would be appreciated that the accompanying drawings and embodiments of the present disclosure are only for the purpose of illustration and are not intended to limit the scope of protection of the present disclosure.

It should be noted that the titles of any section/sub-section provided herein are not limiting. Various embodiments are described herein, and any type of embodiment can be comprised under any section/sub-section. In addition, the embodiments described in any section/sub-section can be combined in any way with any other embodiments described in the same section/sub-section and/or different sections/sub-sections.

In the description of the embodiments of the present disclosure, the term "comprising", and similar terms would be appreciated as open inclusion, that is, "comprising but not limited to". The term "based on" would be appreciated as "at least partially based on". The term "one embodiment" or "the embodiment" would be appreciated as "at least one embodiment". The term "some embodiments" would be appreciated as "at least some embodiments". Other explicit and implicit definitions may also be comprised below. The terms "first", "second", etc. may refer to different or the same objects. The following text may also comprise other explicit and implicit definitions.

The embodiments of the present disclosure may relate to user data, obtaining and/or using data, etc. These aspects comply with respective laws and regulations. In embodiments of the present disclosure, all data collection, obtaining, processing, machining, forwarding, use, etc. are conducted on the premise that it is known and confirmed by the user. Accordingly, when implementing each embodiment of the present disclosure, the user should be informed of the types, usage scope, usage scenarios, etc. of the data or information that may be related, and authorization should be obtained from the user in accordance with the relevant laws and regulations and through an appropriate manner. The specific notification and/or authorization manner may vary according to the actual situation and application scenarios, and the scope of the present disclosure is not limited in this regard.

This specification and the solution in the embodiments, if the processing of personal information is related, the processing will be conducted on the premise that there is a basis of legality (e.g., consent of the subject of the personal information or it is necessary to fulfill a contract, etc.), and the processing will be conducted only within the scope of the stipulations or agreements. The refusal of the user to process personal information other than that which is necessary for the basic functions will not affect the use of the basic functions by the user.

Traditionally, Users support configuring the models, plug-ins, etc. used by applications to quickly create applications, e.g., a robot program (bot). However, such an application usually corresponds to a single agent, which usually has strong processing capabilities in a particular domain, which results in applications that are limited in the requests they can process, and struggle to efficiently process more complex requests.

Embodiments of the present disclosure propose a solution for application creation. According to the solution, configuration information can be obtained, the configuration information indicating a plurality of agents and jump information associated with the plurality of agents for creating an application, the jump information indicating at least that a first agent of the plurality of agents is capable of switching to a second agent to process a request.

In this way, embodiments of the present disclosure can support users in creating a multi-agent based application (e.g., a multi-agent based bot) and can be applied to process tasks by switching agents. Therefore, embodiments of the present disclosure are able to improve the scenario coverage of the application, and thus improve the problem processing capability of the application.

Various example implementations of the embodiments are further described in detail below in conjunction with the accompanying drawings.

### Example environment

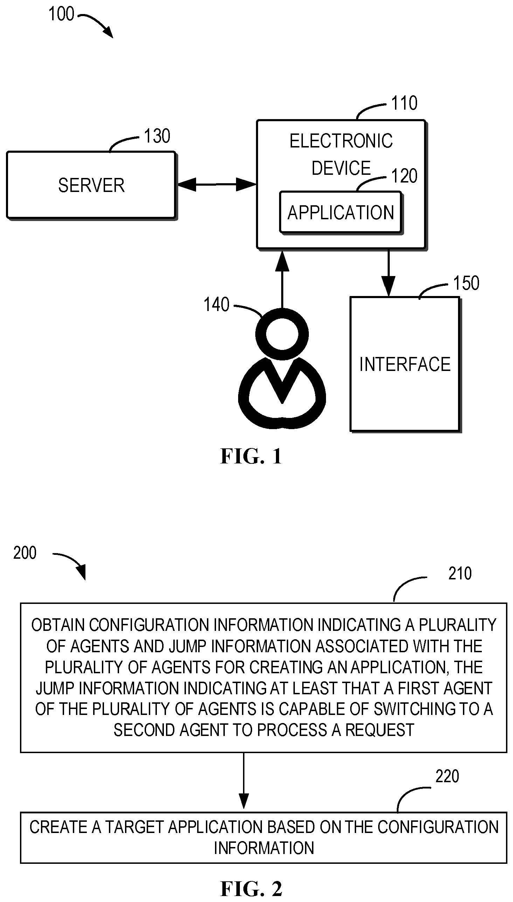

FIG. 1 illustrates a schematic diagram of an example environment 100 in which embodiments of the present disclosure can be implemented. As illustrated in FIG. 1, the example environment 100 may comprise an electronic device 110.

In this example environment 100, the electronic device 110 may execute an application 120 that supports interface interaction. The application 120 may be any suitable type of application for interface interaction, examples of which may comprise but are not limited to: developing applications or other suitable applications that support application development. A user 140 may interact with the application 120 via the electronic device 110 and/or its attached devices.

In the environment 100 of FIG. 1, if the application 120 is active, the electronic device 110 can present an interface 150 for supporting application creation through the application 120.

In some embodiments, the electronic device 110 communicates with the server 130 to implement the provisioning of services for the application 120. The electronic device 110 can be any type of mobile terminal, fixed terminal, or portable terminal, comprising mobile phones, desktop computers, laptop computers, notebook computers, netbook computers, tablet computers, media computers, multimedia tablets, handheld computers, portable gaming terminals, VR/AR devices, personal communication system (PCS) devices, personal navigation devices, personal digital assistants (PDAs), audio/Mobile Pentium 4, digital cameras/camcorders, positioning devices, television receivers, radio broadcast receivers, electronic book devices, gaming devices, or any combination thereof, comprising accessories and peripherals of these devices or any combination thereof. In some embodiments, the electronic device 110 can also support any type of user-specific interface (such as "wearable" circuits, etc.).

The server 130 can be an independent physical server, a server cluster or a distributed system composed of multiple physical servers, or a cloud that provides basic cloud computing services such as cloud services, cloud databases, cloud computing, cloud functions, cloud storage, network services, cloud communications, middleware services, domain name services, security services, content distribution networks, and big data and artificial intelligence platforms. The server 130 can comprise, e.g., computing systems/servers, such as mainframes, EdgeComputing nodes, computing devices in cloud environments, and so on. The server 130 can provide backend services for the application 120 that support virtual scenarios in the electronic device 110.

A communication connection can be established between the server 130 and the electronic device 110. The communication connection can be established by a wired means or a wireless means. The communication connection can comprise but is not limited to, a Bluetooth connection, a mobile network connection, a Universal Serial Bus (USB) connection, a Wireless Fidelity (WiFi) connection, etc., and embodiments of the present disclosure are not limited in this regard. In embodiments of the present disclosure, the server 130 and the electronic device 110 can implement signaling interaction through a communication connection between the two.

It should be understood that the structure and function of each element in the environment 100 are described for illustrative purposes only, without implying any limitation on the scope of the present disclosure.

The following will continue to describe some example embodiments of the present disclosure with reference to the accompanying drawings.

### Example process

FIG. 2 illustrates a flowchart of a process 200 for application creation according to some embodiments of the present disclosure. The process 200 may be implemented at the electronic device 110. The process 200 is described below with reference to FIG. 1.

As illustrated in FIG. 2, at block 210, the electronic device 110 obtains configuration information, wherein the configuration information indicates a plurality of agents and jump information associated with the plurality of agents for creating an application. In some embodiments, the jump information indicates at least that a first agent of the plurality of agents is capable of switching to a second agent to process a request.

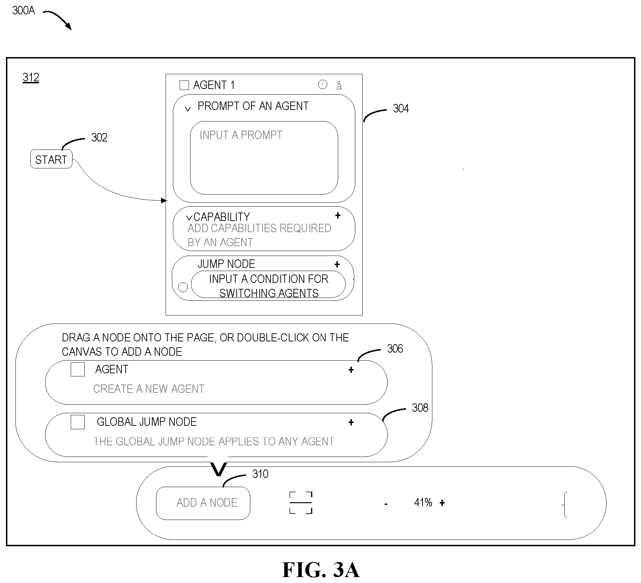

In some embodiments, the electronic device 110 may support a user in configuring a plurality of agents (e.g., two or more agents) comprised in an application and a jump relationship between agents to create an application. An example process for obtaining configuration information according to some embodiments of the present disclosure will be described below in conjunction with FIGS. 3A to 3F.

In some embodiments, the electronic device 110 may provide an editing interface 300A as illustrated in FIG. 3A, in which the electronic device 110 may support a user in creating a node connection graph 312.

Additionally, the electronic device 110 may also support in indicating a jump relationship between corresponding agents by adding connections between nodes.

In some embodiments, the electronic device 110 may support a user in creating a new application. As an example, the electronic device 110 may create a first initial connection graph based on a request to create a new application. Taking FIG. 3A as an example, the first initial connection graph comprises, for example, a first initial node (e.g., node 304). For a scenario with a newly created application, attribute information of the first initial node (e.g., node 304) can be empty.

Further, the electronic device 110 may create a final node connection graph 312 based on an editing operation of the first initial connection graph.

In some embodiments, the electronic device 110 may support a user in converting an existing application based on a single agent to an application based on a multi-agent.

Specifically, the electronic device 110 may create a second initial connection graph based on a conversion request for an existing application associated with a single agent. In some embodiments, the second initial connection graph may comprise a second initial node (e.g., node 304 illustrated in FIG. 3A) created based on the existing application.

In some embodiments, unlike the scenario of a newly created application, attribute information of the agent corresponding to the second initial node (e.g., Agent 1) may, for example, be determined based on the attributes of the existing application. That is, at least a part of the attribute information associated with the existing application may be synchronized to the newly created application.

In some examples, an agent automatically created by converting an application based on a single agent may inherit model information from an existing application. For example, in cases where the existing application is implemented based on a particular model, the agent may also be implemented based on that model.

In some examples, an automatically created agent can inherit plug-in information from an existing application. For example, in the case where the existing application is configured with a set of plug-ins, the agent may also be configured correspondingly with the set of plug-ins.

In some examples, an automatically created agent may inherit workflow information from an existing application. For example, in the case where the existing application is configured with a particular workflow, the agent may also be configured correspondingly with that workflow.

In some examples, an automatically created agent may inherit knowledge information from an existing application. For example, in the case where the existing application is configured with a particular knowledge base, the agent may also be correspondingly configured with that particular knowledge base.

In some embodiments, the application to be converted may also inherit prompt information of an existing application, for example, for setting a prompt of that existing application.

Based on such a manner, embodiments of the present disclosure can support converting an existing single agent application to a multi-agent application and can improve configuration efficiency of the agents through information inheritance.

Continuing with reference to FIG. 2, the electronic device 110 may support the user to add one or more new nodes to the node connection graph 312 through a control 310. For example, the user may add a new node corresponding to the agent through a control 306.

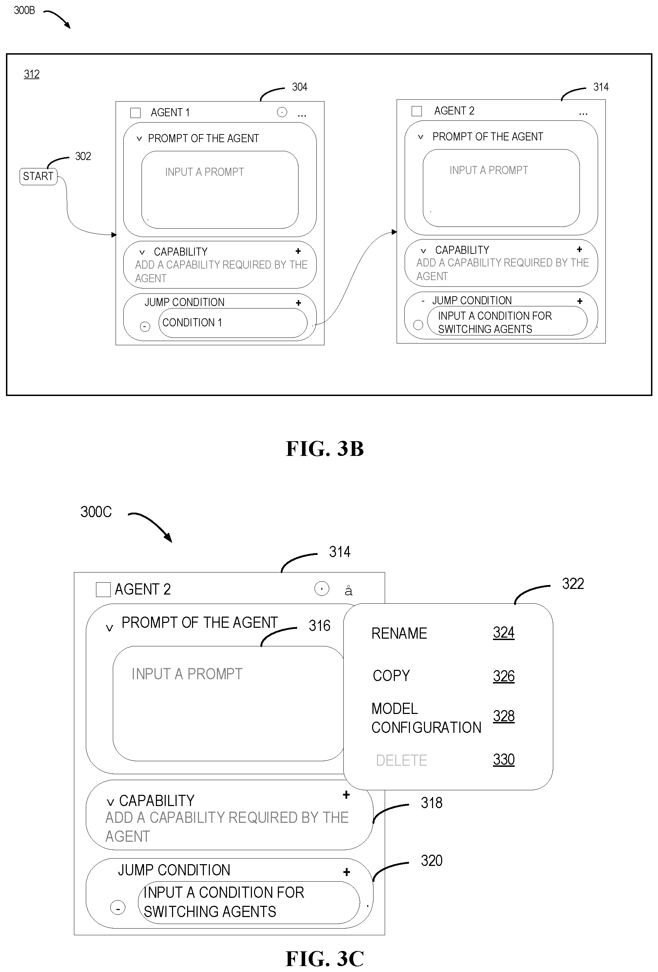

As an example, as illustrated in FIG. 3B, a user may add a node 314 corresponding to "Agent 2" to the node connection graph 312 through the control 306.

Furthermore, as illustrated in FIG. 3C, users can perform an attribute editing operation on a specific node comprised in the node connection graph. Taking node 314 as an example, the electronic device 110 can support users to edit the attribute of the "Agent 2" corresponding to the node 314.

For example, the electronic device 110 can obtain prompt information (also referred to as prompt or prompt) for the "Agent 2" through a control 316. The prompt information can be used to, e.g., set an identity or capability of the "Agent 2".

In some embodiments, the prompt obtained through the control 316 is also referred to as the private prompt of the "Agent 2", which is dedicated to the "Agent 2". In some embodiments, during an actual execution process of "Agent 2", the prompt information for "Agent 2" can be determined by splicing the global prompt for the application to be created and the private prompt. The prompt information can be provided to a model corresponding to the "Agent 2" to set information such as their identity or capabilities.

In some embodiments, the electronic device 110 may support a user to input or edit a global prompt for the application to be created. The global prompt may act on all agents, e.g., a private prompt is spliced to a corresponding agent to generate final prompt information.

Continuing to refer to FIG. 3C, the electronic device 110 can also add a corresponding capability to the "Agent 2" through a control 318. Such capabilities may comprise but are not limited to: plug-in capabilities, tool capabilities, and knowledge capabilities, etc.

Specifically, the electronic device 110 can configure plug-in information, tool information, or knowledge base information of the "Agent 2" through the control 318. The electronic device 110 can support in adding one or more plug-ins, in adding one or more tools, and/or in adding one or more knowledge bases to the "Agent 2".

Additionally, the electronic device 110 can also support users in modifying other attributes of the "Agent 2" through controls in a window 322. For example, the electronic device 110 can modify the name of the "Agent 2" through a control 324; add a new agent with the same attributes to the node connection graph through a control 326; and delete the node 314 through a control 330.

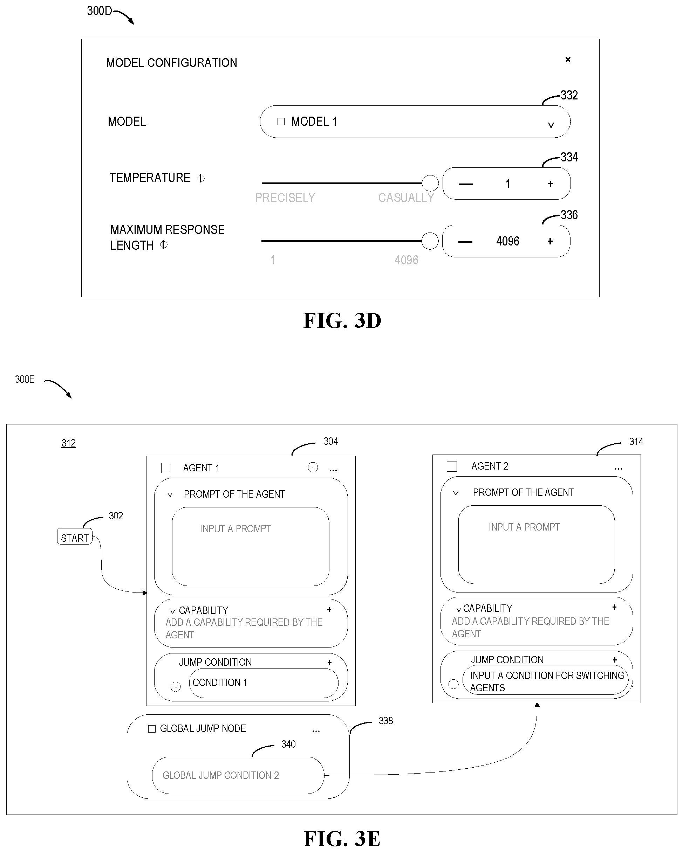

Additionally, the electronic device 110 can modify model information of the "Agent 2" through a control 328. As illustrated in FIG. 3D, the electronic device 110 can determine a model corresponding to the "Agent 2" through a control 332 and modify relevant parameters of the model, such as temperature and maximum response length, through a control 334 or a control 336.

In some embodiments, the above configured attributes about the corresponding agent based on the node 314 may be referred to as the private attribute information of the agent. The user may configure different private attribute information for different agents.

In addition to the private attribute information for the agent, the electronic device 110 may also support the user to configure global attribute information about the application to be created, which may act on all agents associated with the application. As an example, such global attribute information may comprise the global prompt described above.

In some embodiments, the global attribute information may also comprise variable information associated with the application to be created. For example, a user can define global environment variables, user variables, etc., such variables can be used by each agent.

In some embodiments, the global attribute information may also comprise opening information associated with the application to be created. For example, such opening information may comprise an opening statement for the first conversation between the application and the user. In some embodiments, the electronic device 110 may, for example, also support the user in configuring opening information for specific one or more agents such that when such an agent is activated, it may output a corresponding opening statement.

In some embodiments, the global attribute information may also comprise recommendation information associated with the application to be created. For example, such recommendation information may comprise a recommendation interaction provided when the application interacts with the user. In some embodiments, the electronic device 110 may, for example, also support the user in configuring recommendation information for a particular one or more agents such that when such an agent is activated, it may show a corresponding recommendation interaction.

Continuing to refer to FIG. 3C, the electronic device 110 can also configure a connection relationship between nodes in the node connection graph 312 through a control 320. Specifically, as illustrated in FIG. 3B, the electronic device 110 can establish a connection between the node 304 and the node 314 based on a jump condition associated with a user configuration (e.g., Condition 1).

As an example, the connection may indicate a jump relationship between the "Agent 1" and the "Agent 2" to indicate that the "Agent 1" may switch to the "Agent 2" to process a request or perform a task if the "Condition 1" is satisfied.

In some embodiments, the electronic device 110 may support a user in inputting textual content through the control 320 to define any appropriate jump conditions. As an example, the content of the "Condition 1" may be, for example, " when the user queries about the weather." Accordingly, the "Agent 1" may switch to the "Agent 2" to respond to the query when it is determined that the content of the user query is weather-related.

In some embodiments, in order to support the jump from the "Agent 1" to the "Agent 2", a jump plug-in corresponding to the jump condition (e.g., Condition 1) from the "Agent 1" to the "Agent 2" can be created. This allows the "Agent 1" to independently determine whether the jump plug-in is needed in the current scenario to perform the switch from the "Agent 1" to the "Agent 2". In some examples, in the case where the "Agent 1" creates a jump condition, a recommendation interaction for the "Agent 1" can also be generated based on the jump condition.

In some embodiments, the electronic device 110 may, for example, also support the user in only adding connections between nodes without configuring a corresponding jump condition. For example, after the user configures a jump relationship from the "Agent 1" to the "Agent 2", the "Agent 1" may determine whether to switch to the "Agent 2" based on description information of the "Agent 2".

As an example, such description information can indicate the capability of "Agent 2". For example, the description information of the "Agent 2" can indicate that the "Agent 2" is suitable for tasks such as weather inquiry. Accordingly, when the "Agent 1" receives a query about the weather, it can determine that the "Agent 2" is suitable for processing the query and switch to the "Agent 2".

Considering that as the number of nodes increases, in some scenarios, users may expect to configure a global jump condition. As illustrated in FIG. 3A, the electronic device 110 may also support a user in configuring global jump information through a control 308. Such global jump information may indicate that at least one other agent in the node connection graph other than a target agent is capable of switching to that target agent to process a request under a uniformly specific condition. In some embodiments, the global jump information may indicate that all of the agents in the node connection graph other than the target agent are able to switch to that target agent to process a request under a uniformly specific condition.

As illustrated in FIG. 3E, after receiving a selection for the control 308, the electronic device 110 may add a global jump node 338 to the node connection graph 312. Further, the electronic device 110 may establish a connection from this global jump node 338 to the node 314 based on a configuration operation of the user and obtain a corresponding jump condition via a control 340.

Based on this configuration operation, for the application to be created, all other agents other than the "Agent 2" can determine whether to switch to the "Agent 2" based on a "Global Jump Condition 2" during execution. This can also be understood as establishing jump relationships between all other nodes and the node 314.

By supporting users in creating a global jump node, embodiments of the present disclosure can further improve user editing efficiency.

In some embodiments, after the target application is released based on the node connection graph 312, the target application may perform a switch between agents during processing the target request. For example, the target application switches from the "Agent 1" to the "Agent 2" to process the target request. In this case, context information associated with the "Agent 1" may be provided to the "Agent 2" for processing the target request. Such context information may comprise information such as a historical conversation between the user and the "Agent 1".

Accordingly, embodiments of the present disclosure can not only implement switching between agents, but also improve the accuracy of information processing by exchanging contextual information of the agents.

Therefore, as discussed above, the electronic device 110 may support various types of editing operations by the user for the node connection graph 312, for example, adding a new node, deleting an existing node, editing a node attribute, modifying a node connection relationship, and the like.

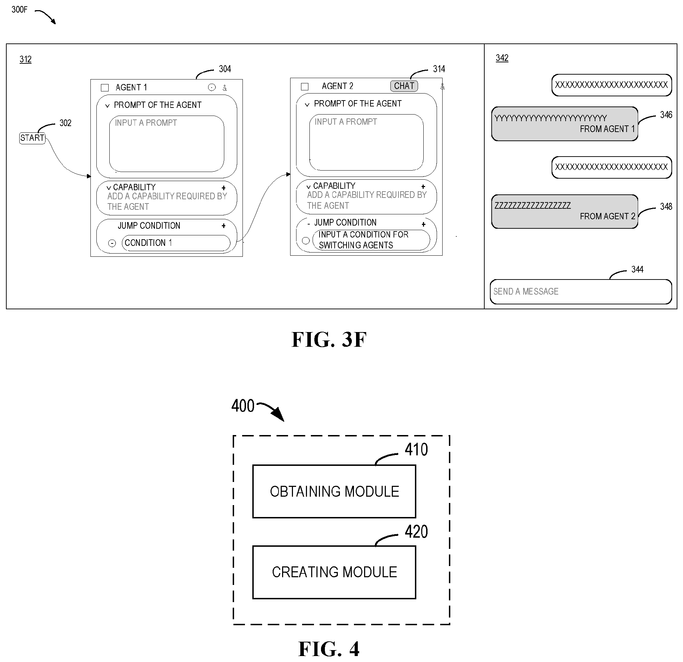

In some embodiments, the electronic device 110 may also support a user to debug the node connection graph 312. As illustrated in FIG. 3F, the electronic device 110 may present a debugging interface 300F, which may comprise a dialog area 342.

As illustrated in FIG. 3F, the electronic device 110 may obtain input information via an input control 344 in the dialog area 342 and may have output information for the application to be debugged in the dialog area 342, for example, an output information 346 or an output information 348.

In some embodiments, the electronic device 110 may show an agent (e.g., "from Agent 1") for generating the output information 346 and show an agent (e.g., "from Agent 2") for generating the output information 348, thereby facilitating user debugging of switching between agents.

In some embodiments, when a particular agent (e.g., the Agent 2) is used to process corresponding input information, the electronic device 110 may also show indication information (e.g., "chat") in a corresponding node 314 to characterize that the "Agent 2" corresponding to the node 314 is in a responsive state.

Additionally, the electronic device 110 may also support the user in switching to a particular agent in the node connection graph 312. For example, the electronic device 110 may select the node 304 to indicate debugging with the "Agent 1". Further, when the user inputs new test content in the dialog area 342, the "Agent 1" will be used to respond to that test content to generate a corresponding output or switch to another agent based on a jump relationship.

It should be appreciated that while the obtaining of configuration information is discussed above with reference to the node connection graph, the electronic device 110, for example, may also support a user in inputting configuration information by other appropriate manners.

As an example, the electronic device 110 may, for example, support a user in configuring a plurality of agents and jump information between agents by means of code editing. Alternatively, the electronic device 110 may configure the respective agents and the jump information by means of a data table, for example.

With continued reference to FIG. 2, at block 220, the electronic device 110 creates a target application based on the configuration information.

As an example, electronic device 110 may create a corresponding target application, e.g., a bot, based on the configuration information. Further, the bot may, for example, be released or shared to other users.

In some embodiments, with the permission of the releaser, other users may also be supported, for example, in creating templates for the released application, and new applications may be created by editing the corresponding node connection graphs, thereby improving the efficiency of the application.

### Example devices and equipment

Embodiments of the present disclosure also provide respective apparatus for implementing the methods or processes described above. FIG. 4 illustrates a schematic structural block diagram of an example apparatus 400 for application creation according to some embodiments of the present disclosure. The apparatus 400 may be implemented as, or included in, the electronic device 110. Individual modules/components in the apparatus 400 may be implemented by hardware, software, firmware, or any combination thereof.

As illustrated in FIG. 4, the apparatus 400 comprises an obtaining module 410 configured for obtaining configuration information indicating, for creating a plurality of agents in an application and jump information associated with the plurality of agents, the jump information indicating at least that a first agent amongst the plurality of agents is capable of switching to a second agent to process a request; and a creating module 420 configured for creating a target application based on the configuration information.

In some embodiments, the obtaining module 410 is specifically configured for: creating, via an editing interface, a node connection graph, the node connection graph comprising a plurality of nodes corresponding to the plurality of agents, a node connection in the node connection graph indicating a jump relationship between nodes; and determining the configuration information based on the node connection graph.

In some embodiments, the obtaining module 410 is specifically configured for: receiving, via the editing interface, a set of editing operations to create the node connection graph, wherein the set of editing operations comprises at least one of: adding a new node to the node connection graph; deleting an existing node in the node connection graph; editing an attribute of a node in the node connection graph; or modifying a connection relationship of nodes in the node connection graph.

In some embodiments, the obtaining module 410 is specifically configured for: creating a first initial connection graph based on a request to create a new application, the first initial connection graph comprising a first initial node with empty attribute information; and creating the node connection graph based on the first initial connection graph.

In some embodiments, the obtaining module 410 is specifically configured for: creating a second initial connection graph based on a conversion request for an existing application associated with a single agent, the second initial connection graph comprising a second initial node created based on the existing application; and creating the node connection graph based on the second initial connection graph.

In some embodiments, the second initial node corresponds to a third agent, and at least one attribute of the third agent is determined based on attribute information of the existing application.

In some embodiments, the at least one attribute comprises at least one of: model information associated with the third agent; plug-in information associated with the third agent; workflow information associated with the third agent; or knowledge information associated with the third agent.

In some embodiments, a first prompt associated with the target application to be created is determined based on a second prompt associated with the existing application.

In some embodiments, the configuration information comprises global attribute information for the plurality of agents in the application.

In some embodiments, the global attribute information comprises at least one of: a global prompt associated with the target application; variable information associated with the target application; opening information associated with the target application; or recommendation information associated with the target application.

In some embodiments, the configuration information comprises private attribute information associated with the plurality of agents.

In some embodiments, the private attribute information comprises at least one of: a private prompt associated with a respective agent; model information associated with a respective agent; plug-in information associated with a respective agent; workflow information associated with a respective agent; or knowledge information associated with a respective agent.

In some embodiments, the prompt information of the respective agent is determined based on the private prompt and a global prompt associated with the target application.

In some embodiments, the apparatus 400 further comprises a first receiving module configured for: receiving a first configuration operation associated with the first agent, the first configuration operation indicating a first condition for switching from the first agent to the second agent.

In some embodiments, the first configuration operation comprises inputting a textual content for indicating a first condition.

In some embodiments, the apparatus 400 further comprises a plug-in creating module configured for: creating a jump plug-in corresponding to the first condition, enabling the first agent to switch to the second agent by invoking the jump plug-in.

In some embodiments, whether the first agent switches to the second agent is determined based on description information of the second agent.

In some embodiments, the configuration information comprises global jump information indicating that at least one other agent in the plurality of agents other than a fourth agent is capable of switching, under a second condition, to the fourth agent to process a request.

In some embodiments, the apparatus 400 further comprises a node creating module configured for: creating, in an editing interface, a global jump node corresponding to the global jump information.

In some embodiments, during processing a target request by the target application, in response to the target application switching from the first agent to the second agent to process the target request, context information associated with the first agent is provided to the second agent for processing the target request.

In some embodiments, the apparatus 400 further comprises a first presentation module configured for: presenting a debugging interface comprising a dialogue area; a second receiving module configured for receiving, via the dialogue area, first input information; and a second presentation module configured for presenting first output information of the target application and information of an agent generating the first output information.

In some embodiments, the apparatus 400 further comprises a third receiving module configured for receiving a selection of a target agent amongst the plurality of agents; a fourth receiving module configured for receiving, via the dialogue area, second input information; and a processing module configured for processing the second input information with the target agent.

In some embodiments, the debugging interface further indicates an agent currently being used to process the first input information.

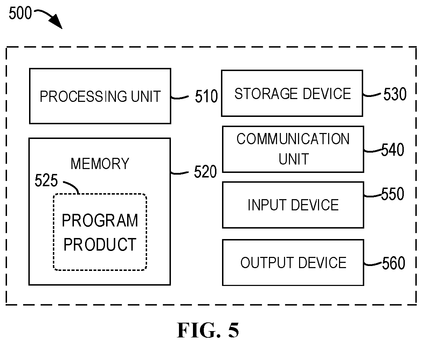

FIG. 5 illustrates a block diagram of an electronic device 500 in which one or more embodiments of the present disclosure may be implemented. It would be appreciated that the electronic device 500 illustrated in FIG. 5 is only an example and should not constitute any restriction on the function and scope of the embodiments described herein. The electronic device 500 illustrated in FIG. 5 may be used to implement the electronic device 110 of FIG. 1.

As illustrated in FIG. 5, the electronic device 500 is in the form of a general electronic device. The components of the electronic device 500 may comprise, but are not limited to, one or more processors or processing units 510, a memory 520, a storage device 530, one or more communication units 540, one or more input devices 550, and one or more output devices 560. The processing units 510 may be an actual or virtual processors and can execute various processes according to the programs stored in the memory 520. In a multiprocessor system, multiple processing units execute computer executable instructions in parallel to improve the parallel processing capability of the electronic device 500.

The electronic device 500 typically comprises a variety of computer storage media. Such media can be any available media that is accessible to the electronic device 500, comprising but not limited to volatile and non-volatile media, removable and non-removable media. The memory 520 can be volatile memory (such as registers, caches, random access memory (RAM)), nonvolatile memory (such as a read-only memory (ROM), an electrically erasable programmable read-only memory (EEPROM), a flash memory), or some combination thereof. The storage device 530 can be any removable or non-removable medium, and can comprise machine-readable medium, such as a flash drive, a disk, or any other medium which can be used to store information and/or data and can be accessed within the electronic device 500.

The electronic device 500 may further comprise additional removable/non-removable, volatile/non-volatile storage medium. Although not illustrated in FIG. 5, a disk driver for reading from or writing to a removable, non-volatile disk (such as a "floppy disk"), and an optical disk driver for reading from or writing to a removable, non-volatile optical disk can be provided. In these cases, each driver may be connected to the bus (not illustrated) by one or more data medium interfaces. The memory 520 can comprise a computer program product 525, which comprises one or more program modules configured for execute various methods or actions of the various embodiments disclosed herein.

The communication unit 540 implements communication with other electronic devices via a communication medium. In addition, functions of components in the electronic device 500 may be implemented by a single computing cluster or multiple computing machines, which can communicate through a communication connection. Therefore, the electronic device 500 may be operated in a networking environment using a logical connection with one or more other servers, a network personal computer (PC), or another network node.

The input device 550 may be one or more input devices, such as a mouse, a keyboard, a trackball, etc. The output device 560 may be one or more output devices, such as a display, a speaker, a printer, etc. The electronic device 500 may also communicate with one or more external devices (not illustrated) through the communication unit 540 as required. The external device, such as a storage device, a display device, etc., communicate with one or more devices that enable users to interact with the electronic device 500, or communicate with any device (for example, a network card, a modem, etc.) that makes the electronic device 500 communicate with one or more other computing devices. Such communication may be executed via an input/output (I/O) interface (not illustrated).

According to example implementation of the present disclosure, there is provided a computer-readable storage medium on which a computer-executable instruction or computer program is stored, wherein the computer-executable instructions are executed by a processor to implement the methods described above.

Various aspects of the present disclosure are described herein with reference to the flow chart and/or the block diagram of the method, the device, the apparatus, and the computer program product implemented in accordance with the present disclosure. It would be appreciated that each block of the flowchart and/or the block diagram and the combination of each block in the flowchart and/or the block diagram may be implemented by computer-readable program instructions.

These computer-readable program instructions may be provided to the processing units of general-purpose computers, special computers, or other programmable data processing devices to produce a machine that generates a device to implement the functions/acts specified in one or more blocks in the flow chart and/or the block diagram when these instructions are executed through the processing units of the computer or other programmable data processing devices. These computer-readable program instructions may also be stored in a computer-readable storage medium. These instructions enable a computer, a programmable data processing device and/or other devices to work in a specific way. Therefore, the computer-readable medium containing the instructions comprises a product, which comprises instructions to implement various aspects of the functions/acts specified in one or more blocks in the flowchart and/or the block diagram.

The computer-readable program instructions may be loaded onto a computer, other programmable data processing apparatus, or other devices, so that a series of operational steps can be performed on a computer, other programmable data processing apparatus, or other devices, to generate a computer-implemented process, such that the instructions which execute on a computer, other programmable data processing apparatus, or other devices implement the functions/acts specified in one or more blocks in the flowchart and/or the block diagram.

The flowchart and the block diagram in the drawings show the possible architecture, functions and operations of the system, the method and the computer program product implemented in accordance with the present disclosure. In this regard, each block in the flowchart or the block diagram may represent a part of a module, a program segment, or instructions, which comprises one or more executable instructions for implementing the specified logic function. In some alternative implementations, the functions marked in the block may also occur in a different order from those marked in the drawings. For example, two consecutive blocks may actually be executed in parallel, and sometimes can also be executed in a reverse order, depending on the function involved. It should also be noted that each block in the block diagram and/or the flowchart, and combinations of blocks in the block diagram and/or the flowchart, may be implemented by a dedicated hardware-based system that performs the specified functions or acts, or by the combination of dedicated hardware and computer instructions.

Each implementation of the present disclosure has been described above. The above description is example, not exhaustive, and is not limited to the disclosed implementations. Without departing from the scope and spirit of the described implementations, many modifications and changes are obvious to ordinary skill in the art. The selection of terms used herein aims to best explain the principles, practical application, or improvement of technology in the market of each implementation, or to enable other ordinary skill in the art to understand the various embodiments disclosed herein.

## Claims

1. A method for application creation, comprising:
obtaining configuration information indicating a plurality of agents and jump information associated with the plurality of agents for creating an application, the jump information indicating at least that a first agent of the plurality of agents is capable of switching to a second agent to process a request; and
creating a target application based on the configuration information.

2. The method of claim 1, wherein obtaining configuration information comprises:
creating, via an editing interface, a node connection graph, the node connection graph comprising a plurality of nodes corresponding to the plurality of agents, a node connection in the node connection graph indicating a jump relationship between nodes; and
determining the configuration information based on the node connection graph.

3. The method of claim 2, wherein creating, via an editing interface, a node connection graph comprises receiving, via the editing interface, a set of editing operations to create the node connection graph,
wherein the set of editing operations comprises at least one of:
adding a new node to the node connection graph;
deleting an existing node in the node connection graph;
editing an attribute of a node in the node connection graph; or
modifying a connection relationship of nodes in the node connection graph.

4. The method of claim 2, wherein creating, via an editing interface, a node connection graph comprises:
creating a first initial connection graph based on a request to create a new application, the first initial connection graph comprising a first initial node with empty attribute information; and
creating the node connection graph based on the first initial connection graph.

5. The method of claim 2, wherein creating, via an editing interface, a node connection graph comprises:
creating a second initial connection graph based on a conversion request for an existing application associated with a single agent, the second initial connection graph comprising a second initial node created based on the existing application; and
creating the node connection graph based on the second initial connection graph.

6. The method of claim 5, wherein the second initial node corresponds to a third agent, and at least one attribute of the third agent is determined based on attribute information of the existing application.

7. The method of claim 6, wherein the at least one attribute comprises at least one of:
model information associated with the third agent;
plug-in information associated with the third agent;
workflow information associated with the third agent; or
knowledge information associated with the third agent.

8. The method of claim 6, wherein a first prompt associated with the target application to be created is determined based on a second prompt associated with the existing application.

9. The method of claim 1, wherein the configuration information comprises global attribute information for the plurality of agents in the application.

10. The method of claim 9, wherein the global attribute information comprises at least one of:
a global prompt associated with the target application;
variable information associated with the target application;
opening information associated with the target application; or
recommendation information associated with the target application.

11. The method of claim 1, wherein the configuration information comprises private attribute information associated with the plurality of agents.

12. The method of claim 11, wherein the private attribute information comprises at least one of:
a private prompt associated with a respective agent;
model information associated with a respective agent;
plug-in information associated with a respective agent;
workflow information associated with a respective agent; or
knowledge information associated with a respective agent.

13. The method of claim 12, wherein the prompt information of the respective agent is determined based on the private prompt and a global prompt associated with the target application.

14. The method of claim 1, further comprising:
receiving a first configuration operation associated with the first agent, the first configuration operation indicating a first condition for switching from the first agent to the second agent.

15. The method of claim 14, wherein the first configuration operation comprises inputting a textual content for indicating a first condition.

16. The method of claim 14, further comprising:
creating a jump plug-in corresponding to the first condition, enabling the first agent to switch to the second agent by invoking the jump plug-in.

17. The method of claim 1, wherein whether the first agent switches to the second agent is determined based on description information of the second agent.

18. The method of claim 1, wherein the configuration information comprises global jump information indicating that at least one other agent in the plurality of agents other than a fourth agent is capable of switching, under a second condition, to the fourth agent to process a request.

19. The method of claim 18, further comprising:
creating, in an editing interface, a global jump node corresponding to the global jump information.

20. The method of claim 1, wherein:
during processing a target request by the target application, in response to the target application switching from the first agent to the second agent to process the target request, context information associated with the first agent is provided to the second agent for processing the target request.

21. The method of claim 1, further comprising:
presenting a debugging interface comprising a dialogue area;
receiving, via the dialogue area, first input information; and
presenting first output information of the target application and information of an agent generating the first output information.

22. The method of claim 21, further comprising:
receiving a selection of a target agent amongst the plurality of agents;
receiving, via the dialogue area, second input information; and
processing the second input information with the target agent.

23. The method of claim 21, wherein the debugging interface further indicates an agent currently being used to process the first input information.

24. An apparatus for application creation, comprising:
an obtaining module configured for obtaining configuration information indicating, for creating a plurality of agents in an application and jump information associated with the plurality of agents, the jump information indicating at least that a first agent amongst the plurality of agents is capable of switching to a second agent to process a request; and
a creating module configured for creating a target application based on the configuration information.

25. An electronic device comprising:
at least one processing unit; and
at least one memory being coupled to the at least one processing unit and storing instructions for execution by the at least one processing unit, the instructions, when executed by the at least one processing unit, cause the electronic device to perform the method of any of claims 1 to 23.

26. A computer-readable storage medium having a computer program stored thereon, the computer program being executable by a processor to implement the method of any of claims 1 to 23.
